Europäisches Patentamt

European Patent Office

Office européen des brevets

(19)

(11) Publication number: **0 057 618**
A1

## (12) EUROPEAN PATENT APPLICATION

(21) Application number: 82400011.1

(22) Date of filing: 06.01.82

(51) Int. Cl.³: **F 16 D 65/12,** F 16 D 65/847, F 16 D 55/224

(30) Priority: 15.01.81 US 225179

(43) Date of publication of application: **11.08.82** Bulletin 82/32

(84) Designated Contracting States: **DE FR GB**

(71) Applicant: THE BENDIX CORPORATION, Executive Offices Bendix Center, Southfield Michigan 48037 (US)

(72) Inventor: Fulmer, Keith Harold, 15688 Kern Road, Mishawaka Indiana 46544 (US)

(74) Representative: Brullé, Jean et al, Service Brevets Bendix 44, rue François 1er, F-75008 Paris (FR)

(54) Disc brake.

(57) A disc brake (10) includes a brake disc (12) having friction faces (14, 16) on opposite sides thereof. A caliper (36) straddles the brake disc (12) and cooperates with a pair of friction elements (60, 62) to urge the latter into engagement with the friction faces (14, 16) to effect a brake application retarding rotation of the brake disc. The brake disc (12) includes a multitude of radially-extending passages (66) opening to the atmosphere at their radially inner ends and opening on the friction faces (14, 16) at their radially outer ends. Centrifugal force causes atmospheric air to flow through the radially-extending passages (66) in response to rotation of the brake disc. The air flowing from the passage openings on the friction faces (14, 16) provides a film of air between the friction elements (60, 62) and friction faces (14, 16) so that the friction elements (14, 16) do not drag on the brake disc (12) when the brake (10) is not applied.

## DISC BRAKE

The invention relates to a disc brake. More particularly, the invention relates to a disc brake including a brake disc having friction faces on opposite sides thereof. A caliper straddles the brake disc and cooperates with a pair of friction elements to urge the latter into engagement with the friction faces to retard rotation of the brake disc. The brake disc comprises a multitude of radially-extending passages opening to the atmosphere at their radially inner ends and opening on the friction faces at their radially outer ends.

A disc brake is known in accordance with the United States Patent 3,469,658, issued 30 September 1969, to B. Forsythe, wherein the brake disc is radially slotted to provide for the circulation of cooling air therethrough. The radial slots provide for the dissipation of heat generated by friction during braking.

A disc brake is known in accordance with the United States Patent 4,084,665, issued 18 April 1978, to R. Burnett wherein the brake disc defines a multitude of radially-extending passages open to the atmosphere at their ends. The radially-extending passages pass between the friction faces of the brake disc. When the brake disc is rotated, certrifugal force moves cooling air radially outwardly through the radially-extending passages to dissipate heat generated by friction during braking.

With disc brakes of the kind illustrated in the Forsythe and Burnett patents, the radially-extending slots or passages serve only to cool the brake disc.

In order to diminish frictional drag of the friction elements on the brake disc when the brake is not applied, the disc brake illustrated in the Forsythe patent includes a coil spring biasing one of the friction elements away from the brake disc. Similarly, the caliper of the disc brake illustrated in the Burnett patent includes an annular elastomeric sealing member cooperating with the piston of the hydraulic motor to retract the piston to a nonbraking position.

The invention as claimed is intended to avoid the shortcomings of prior disc brakes by providing a disc brake wherein the brake disc defines a multitude of radially-extending passages opening at their radially outer ends on the friction faces of the brake disc. The radially-extending passages open to the atmosphere at their radially inner ends. As a result, when the brake disc is rotated, centrifugal force moves atmospheric air through the radially-extending passages to cool the brake disc. Additionally, the air flowing from the passage openings on the friction faces of the brake disc provides a friction-reducing film of pressurized air between the friction elements and the friction faces of the brake disc.

The advantage offered by the invention is mainly that the frictional drag of the friction elements on the brake disc is diminished when the brake is not applied by the pressurized air flowing from the passage openings on the friction faces of the brake disc.

A preferred embodiment of the invention is described in detail below with reference to drawings which illustrate only the preferred embodiment, in which:

Figure 1 is a view of a disc brake embodying the invention;

Figure 2 is a fragmentary cross-sectional view taken along the line 2-2 of Figure 1; and

Figure 3 is a fragmentary cross-sectional view taken along the line 3-3 of Figure 1.

The drawings illustrate a disc brake 10 including a rotatable brake disc 12 having friction faces 14 and 16 on opposite sides thereof. Threaded fasteners 18 couple the brake disc 12 to a rotatable axle 20. A nonrotatable axle housing 22 journals the axle 20 and carries a support member 24. The support member 24 includes a pair of circumferentially-spaced, axially-extending arms 26 and 28 which define a recess 30 therebetween. The arms 26 and 28 define axially-extending, V-shaped abutment surfaces 32 and 34, respectively, adjacent the recess 30.

A caliper 36 straddling the brake disc 12 is received in the recess 30 and includes a bridge portion 38 and a pair of radially inwardly-extending legs 40 and 42. The caliper 36 defines axially-extending, V-shaped grooves 44 and 46 slidably engaging the respective V-shaped abutment surfaces of the arms 26 and 28. Consequently, the caliper 36 is axially movable relative the support member 24 and brake

-3-  0057618

disc 12. The leg 42 of caliper 36 defines a bore 48 having a closed end 50. A piston 52 is slidably received in the bore 48 and cooperates with the caliper 36 to define a variable-volume chamber 54. A groove 56 circumscribes the bore 48 and receives an annular sealing member 58 sealingly cooperating with the piston 52.

A pair of friction elements 60 and 62 are movably received in the recess 30. The caliper 38 cooperates with the friction elements 60 and 62 to urge the latter into engagement with the friction faces 14 and 16 to retard rotation of the brake disc 12.

The brake disc 12 defines a multitude of axially-extending passages 64 opening on the friction faces 14 and 16. A passage 66 extends radially inwardly from each passage 64 and opens at its radially inner end to the atmosphere.

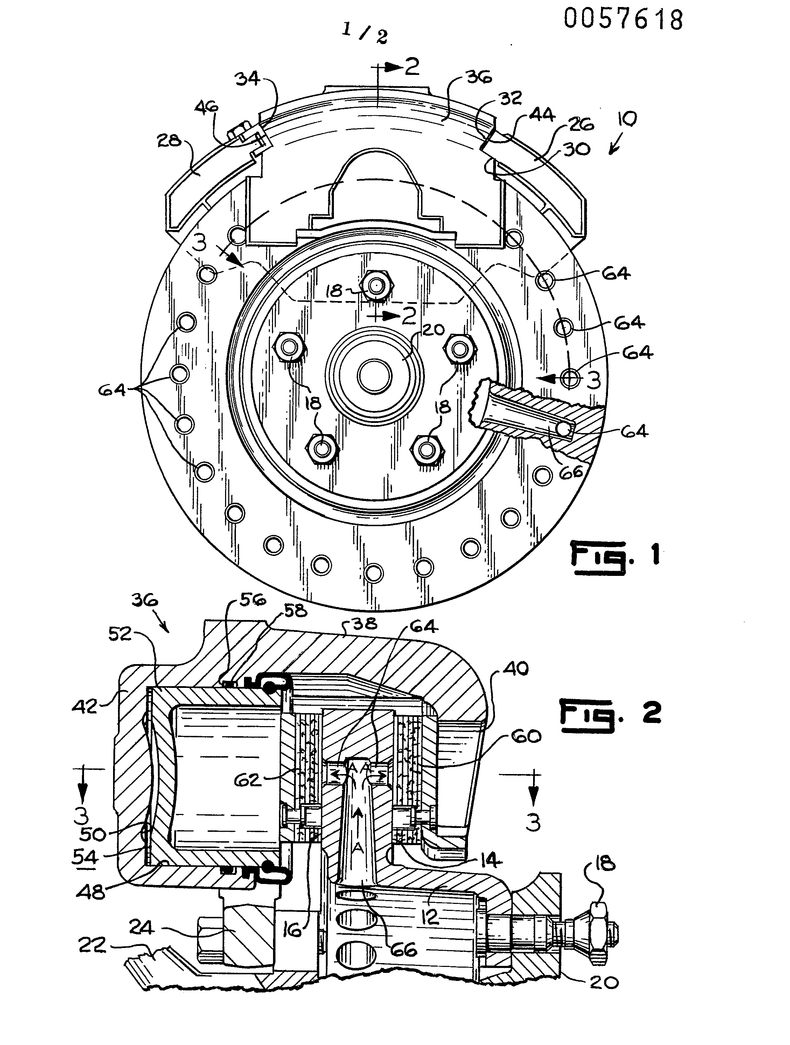

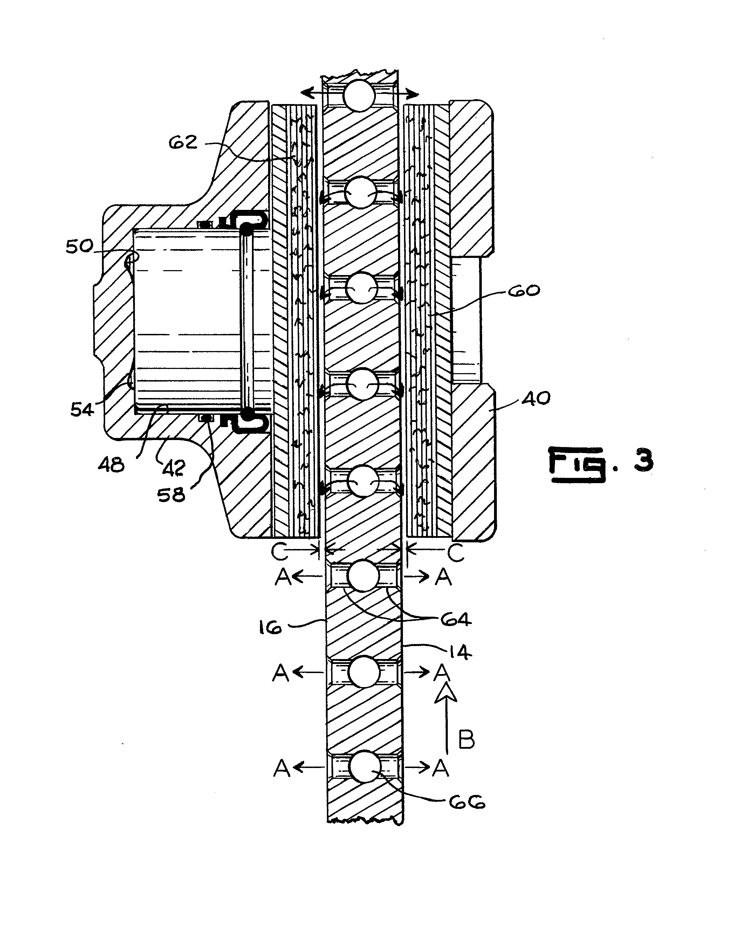

When the brake disc 12 is rotating, as is illustrated by the arrows B, viewing Figures 1 and 3, centrifugal force moves atmospheric air radially outwardly through the passages 66 and axially through the passages 64 opening on the friction faces 14 and 16, as is illustrated by the arrows A.

When the brake disc 12 is rotating, and a brake application is effected, pressurized fluid supplied to the chamber 54 moves the piston 52 rightwardly, viewing Figure 2, to engage the friction element 62 with the friction face 16 on the brake disc 12. The pressurized fluid in chamber 54 also acts on the closed end 50 of the bore 48 to create a reaction force moving the caliper 36 leftwardly, viewing Figure 2. The reaction force is transferred to the friction element 60 via the bridge portion 38 and leg 40 of the caliper 36. Consequently, the friction elements 60 and 62 are urged into engagement with the friction faces 14 and 16 to retard rotation of the brake disc 12.

As is well known in the art, the frictional engagement of the friction elements 60 and 62 with the rotating brake disc 12 causes frictional heating of the brake disc so that its temperature is increased during a brake application. Atmospheric air moving through the passages 64 and 66 responsive to rotation of the brake disc absorbs a portion of the frictional heat so that the brake disc does not become overheated.

When a brake application is terminated, the pressurized fluid is released from the chamber 54. Consequently, the annular sealing member 58 retracts the piston 52 to a nonbraking position. Run out or wobble of the rotating brake disc 12 in combination with axial movement of the brake disc and axle 20 relative to the axle housing 22 moves the friction element 60 and caliper 36 rightwardly and moves the friction element 62 leftwardly, viewing Figure 2, so that the frictional engagement of the friction elements with the friction faces is reduced. Additionally, the atmospheric air flowing from the passages 64 opening on the friction faces 14 and 16 provides a film of pressurized air between the brake disc and the friction elements. The pressurized air acts on the friction elements to bias the latter away from the friction faces of the brake disc, viewing Figure 3, eliminating frictional drag of the friction elements on the brake disc.

Figure 3 illustrates that the air flow through the passages 64 and 66 is believed to have a high velocity and relatively low pressure as the passages approach the friction elements 60 and 62. When the passages pass between the friction elements, the passages 64 are substantially closed, even though there exists a small clearance C between the friction faces and the friction elements. As a result, the momentum of the rapidly moving column of air in the passage 66 is believed to compress the air in the passage 64 immediately adjacent the friction elements so that air flows from the passages 64 at a relatively high pressure and low velocity. The high pressure air flowing from the passages 64 biases the friction elements 60 and 62 away from the friction faces 14 and 16 of the brake disc 12 so that the friction elements do not drag on the brake disc when the brake is not applied.

0057618

CLAIMS

1. A rotatable brake disc (12) having friction faces (14, 16) on opposite sides thereof, characterized in that said brake disc (12) defines a multitude of radially-extending passages (64, 66) opening to the atmosphere at their radially inner ends (66), each of said passages (64, 66) opening on one of said friction faces (14, 16) at its radially outer end (64).

2. In a disc brake (10), a rotatable brake disc (12) having friction faces (14, 16) on opposite sides thereof, characterized in that said brake disc (12) defines an axially-extending passage (64) opening on one of said friction faces (14, 16) and means (66) for supplying pressurized air to said axially-extending passage (64).

3. The invention of claim 2 wherein said means (66) for supplying pressurized air to said axially-extending passage (64) includes a radially-extending passage (66) open to the atmosphere at its radially inner end and intersecting said axially-extending passage (64) whereby atmospheric air flows radially outwardly in said radially-extending passage (66) in response to rotation of said brake disc (12).

4. 4. In a disc brake (10), a rotatable brake disc (12) having friction faces (14, 16) on opposite sides thereof, a caliper (36) straddling said brake disc (12) and cooperating with a pair of friction elements (60, 62) to urge the latter into engagement with said friction faces (14, 16) to retard rotation of said brake disc (12), and a non-rotatable support member (24) carrying said caliper (36), the improvement wherein said brake disc (12) defines a multitude of radially-extending passages (66), each of said passages (66) opening on one of said friction faces (14, 16) and communicating with the atmosphere radially inwardly of said opening on said one friction face.

Fig. 1

Fig. 2

0057618

FIG. 3

## EUROPEAN SEARCH REPORT

**European Patent Office**

Application number

EP 82 40 0011

### DOCUMENTS CONSIDERED TO BE RELEVANT

| Category | Citation of document with indication, where appropriate, of relevant passages | Relevant to claim |
|---|---|---|
| X | <u>US - A - 3 805 935</u> (ARMSTRONG)<br>* The whole document, figures 1-4 * | 1,2,3,4 |
| X | <u>FR - A - 1 113 195</u> (DESROZIERS)<br>* The whole document; figures 1, 2 * | 1,2,3,4 |
| X | <u>US - A - 2 765 881</u> (PIERCE)<br>* Column 2, lines 23-52; figures 1,2 * | 1,2,3,4 |
| A | <u>FR - A - 1 263 528</u> (KNORR-BREMSE) | 1 |
| AD | <u>US - A - 3 469 658</u> (FORSYTHE) | |
| AD | <u>US - A - 4 084 665</u> (BURNETT) | |

**CLASSIFICATION OF THE APPLICATION (Int. Cl. 3)**

F 16 D 65/12
F 16 D 65/847
F 16 D 55/224

**TECHNICAL FIELDS SEARCHED (Int.Cl. 3)**

F 16 D 65/00
F 16 D 55/00

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

The present search report has been drawn up for all claims

| Place of search | Date of completion of the search | Examiner |
|---|---|---|
| The Hague | 22-04-1982 | |

EPO Form 1503.1  06.78